# EUROPÄISCHE PATENTANMELDUNG

(11) **EP 0 761 775 A1**
(43) Veröffentlichungstag der Anmeldung: **12.03.1997**
(21) Anmeldenummer: 95113906.2
(22) Anmeldetag: 05.09.1995
(51) Int. Cl.: C09D 5/02

(54) **Beschichtungsmittel und Verfahren zu dessen Herstellung**

(71) Anmelder: ispo GmbH, D-65826 Kriftel (DE)
(72) Erfinder: Köllreuter, Andreas, D-65830 Kriftel (DE); Born, Andrea, D-65830 Kriftel (DE)
(74) Vertreter: Weber, Dieter, Dr.

(57) **Zusammenfassung**

Die vorliegende Erfindung betrifftf ein in Wasser dispergierbares Beschichtungsmittel, bestehend aus einem Bindemittel und weitere Additive enthaltenden Gemisch, sowie ein Verfahren zur Herstellung eines solchen Beschichtungsmittels. Um ein festes, mit Wasser anmachbares Beschichtungsmittel zu schaffen, das baustellenseitig leicht mit Wasser zu der erwünschten flüssigen Konsistenz anmachbar ist, im trockenen Zustand nicht staubt und sich beim Transport nicht oder nur ganz geringfügig entmischt und welches außerdem gut lagerfähig und in einfacher Weise und ohne Abwiegen möglichst exakt dosierbar ist, wird erfindungsgemäß vorgeschlagen, daß es in Form gepreßter Formteile mit einem Gehalt an freiem oder gebundenem Wasser von 0,01 bis 15 Gew.-% vorliegt und beim Dispergieren in einer beliebigen Menge Wasser einen pH-Wert oberhalb 6 ergibt. Hinsichtlich des Verfahrens wird vorgeschlagen, daß man ein pulverförmiges Gemisch von Bestandteilen des Beschichtungsmittels als Trägermaterial mit einer die übrigen oder alle oder einen Teil aller Komponenten des Beschichtungsmittels enthaltenden wäßrigen Dispersion oder mit Wasser mittels eines Gasstromes bei einer Temperatur von 30 bis 800 °C in Berührung bringt und dabei so viel Wasser entzieht, daß die Restfeuchte des gesamten Behandlungsgemisches im Bereich von 0,01 bis 15 Gew.-% liegt und das Behandlungsgemisch zunächst in rieselförmiger Granulatform vorliegt und anschließend zu Formteilen wie zum Beispiel Pellets oder Tabletten verpreßt wird.

## Beschreibung

Die Erfindung betrifft ein festes Beschichtungsmittel, das beispielsweise als Farbe, Lacke, Putz, Grundierung, Fußbodenbeschichtung oder dergleichen eingesetzt werden kann und vor der Verwendung an Ort und Stelle mit Wasser angemacht wird. Weiterhin betrifft die vorliegende Erfindung auch ein Verfahren zur Herstellung eines entsprechenden Beschichtungsmittels.

Dabei wird auf die EP-A-0 670 352, welche ein Dokument im Sinne von Artikel 54 (3) EPÜ ist und auf dieselbe Anmelderin zurückgeht, Bezug genommen. Hinsichtlich der chemischphysikalischen Zusammensetzung ist das Beschichtungsmittel dieser älteren europäischen Patentanmeldung mit dem Beschichtungsmittel der vorliegenden Erfindung identisch. Die ältere Anmeldung und die jetzt vorliegende Patentanmeldung weisen daher in dieser Hinsicht weitgehende Übereinstimmung auf.

Flüssige Beschichtungsmittel, wie beispielsweise Farben für den Innen- und Außenanstrich von Gebäuden, erfordern voluminöse und flüssigkeitsdichte Verpackungen, wie Kunststoffeimer, Tonnen oder Dosen, und haben ein hohes Gewicht. Man ist daher bemüht, die aufwendigen Verpackungen zu vereinfachen und die Transportkosten zu reduzieren. Beispielsweise wäre es von Vorteil, derartige Beschichtungsmittel in trockener Form vorliegen zu haben und an der Verwendungsstelle leicht mit Wasser zu der erwünschten Flüssigkonsistenz anmachen zu können. Dies erlaubt eine Verpackung in Beuteln oder Tüten aus Kunststoffolien oder Papier und reduziert erheblich die Transportkosten, da das Wasser der Beschichtungsmittel nicht mittransportiert werden muß.

Pulverige Beschichtungsmaterialien, die an der Baustelle mit Wasser angemacht werden, sind beispielsweise aus der EP-OS 0 230 220 bekannt. Sie sind wasserfreie Gemische, die neben mineralischen Zuschlagstoffen, wie Füllstoffen und/oder Pigmenten, ein Bindemittel, ein wasserlösliches Netzmittel und ein Verdickungsmittel auf Polysaccharidbasis enthalten. Diese pulverförmigen Beschichtungsmittel werden durch trockenes Vermischen der Einzelbestandteile gewonnen.

Solche pulverförmigen Beschichtungsmittel besitzen verschiedene Nachteile. Da sie aus einem Gemisch feinteiliger Pulver der Einzelkomponenten bestehen, neigen sie zum Stauben, was beim baustellenseitigen Anmachen der Beschichtungsmittel mit Wasser für die Arbeiter unangenehm und auf die Dauer gesundheitsgefährdend ist. Infolge der unterschiedlichen Korngrößen und spezifischen Gewichte der Einzelkomponenten besteht weiterhin die Gefahr, daR sich solche pulverförmigen Beschichtungsmittel bei der Lagerung und insbesondere beim Transport entmischen, so daß die Zusammensetzung innerhalb einer Verpackung in unterschiedlichen Höhen verschieden ist. Dies bedeutet, daß die Endzusammensetzung des Beschichtungsmittels unterschiedlich sein kann, wenn an der Baustelle nicht der gesamte Verpackungsinhalt auf einmal mit Wasser angemacht wird, sondern das pulverförmige Beschichtungsmittel anteilweise der Packung entnommen und angemacht wird. Auf diese Weise können fehlerhafte Anstriche resultieren, da die Beschichtungsmittel trotz korrekter Einwaage der Einzelkomponenten nach dem baustellenseitigen Anmachen mit Wasser nicht die optimale Zusammensetzung haben.

Schließlich kann ein Nachteil bekannter pulverförmiger Beschichtungsmittel darin bestehen, daß die Trockengemische schwierig mit Wasser anzumachen sind, da einzelne Komponenten sich langsamer als die anderen lösen und Pigment/Füllstoff-Agglomerate enthalten können, so daß entweder lange Mischzeiten verbunden mit hoher Mischenergie angewendet werden müssen oder die Gefahr besteht, daß bestimmte Komponenten nach der Mischzeit nicht in kolloidaler oder gelöster Form vorliegen.

Die der Erfindung zugrundeliegende Aufgabe bestand daher darin, ein festes, mit Wasser anmachbares Beschichtungsmittel zu bekommen, das baustellenseitig leicht mit Wasser zu der erwünschten flüssigen Konsistenz anmachbar ist, im trockenen Zustand nicht staubt und sich beim Transport nicht oder nur ganz geringfügig entmischt. Außerdem soll das Beschichtungsmittel gut lagerfähig und in einfacher Weise und ohne Abwiegen möglichst exakt dosierbar sein.

Erfindungsgemäß wird diese Aufgabe mit einem in Wasser dispergierbaren und redispergierbaren Beschichtungsmittel gelöst, das ein Bindemittel und weitere Additive enthaltendes Gemisch ist und dadurch gekennzeichnet ist, daß es in der Form von Pellets, Tabletten oder ähnlichen Formteilen mit einem Gehalt an freiem oder gebundenem Wasser von 0,01 bis 15 Gew.-% vorliegt und beim Dispergieren in einer beliebigen Wassermenge einen pH-Wert oberhalb 6, vorzugsweise im Bereich von 7 bis 12 ergibt.

Nach der eingangs genannten älteren Patentanmeldung derselben Anmelderin sollte das Beschichtungsmittel in Form eines Granulats vorliegen. Dieses hat zwar gegenüber den bekannten pulverförmigen Beschichtungsmitteln bereits erhebliche Vorteile, die auch durch den Gegenstand der vorliegenden Erfindung erzielt werden. Ein gewisser Nachteil der Granulate liegt jedoch darin, daß sie mengenmäßig nicht in so einfacher Weise exakt dosierbar sind wie wohldefinierte Formteile. Insbesondere wenn die Granulatgröße schwankt und die Verteilung der Korngrößen bei der Herstellung etwas variiert, läßt sich die exakte Menge nicht nicht mehr mit Meßbechern oder dergleichen so genau bestimmen, wie dies durch Wiegen möglich ist. Das Abwiegen ist jedoch ein aufwendiger und zeitraubender Vorgang, der außerdem noch das Vorhandensein einer entsprechenden Waage erfordert, was auf Baustellen im allgemeinen nicht der Fall ist. Die Formteile wie Pellets oder Tabletten haben jedoch eine konstante Größe und ein exakt definiertes Volumen. Sie können also genau abgezählt oder stapelweise in genau bestimmten Mengen in Wasser dispergiert werden. Selbst wenn zum Beispiel Pellets mit nicht konstanter Größe hergestellt werden, sind bei solchen Pellets die Größenschwankungen immer noch im Vergleich zu den Größenschwankungen, die die Körner eines Granulats aufweisen, gering, so daß Pellets auch mit einem Meßbecher ausreichend exakt dosierbar sind. Die exakte Dosierbarkeit von Formteilen wie Tabletten oder Pellets ist besonders bei Abtönfarben von Bedeutung, weil dann reproduzierbar exakt die gewünschten Farbtöne hergestellt werden können.

Dabei bestehen die Formteile vorzugsweise ihrerseits aus einem Granulat, wie es zum Beispiel nach einem Verfahren der EP-0 670 352 hergestellt werden kann, wobei allerdings große Schwankungsbreiten in der Korngröße des Granulates zulässig sind. Erfindungsgemäß sollte als Ausgangssubstanz ein Beschichtungsmittelgranulat mit einer Korngröße zwischen 1 und 6000 µ, besser zwischen 50 und 5000 µm vorliegen, vorzugsweise sollte das Granulat eine Korngröße im Bereich von 100 bis 500 µm haben, mit einer Tendenz zu den kleineren Korngrößen. Dieses Granulat wird dann beispielsweise zu Tabletten gepreßt, deren Durchmesser zwischen etwa 10 und 50 mm und deren Höhe zwischen 3 und 15 mm betragen können. Als gut geeignet haben sich Tabletten mit Maßen von 5 Höhe und 16 mm Durchmesser erwiesen. Derartige Tabletten werden mit einem Preßdruck zwischen 3 und 70 kN, vorzugsweise mit etwa 10 kN aus dem erwähnten Granulat hergestellt. Die so hergestellten Tabletten haben eine Druckfestigkeit in der Größenordnung von einigen N, typischerweise von 5 bis 10 N, wobei man die Druckfestigkeit jedoch unter Umständen noch durch Auswahl einer geeigneten Zusammensetzung oder durch Hinzufügen von Additven erhöhen kann, falls dies gewünscht ist. Wie bereits erwähnt, können diese Tabletten einfach abgezählt werden, gegebenenfalls auch in größeren Stapeln, wodurch sich eine sehr exakte Dosiermöglichkeit ergibt, da aufgrund des Zusammenpressens jede der Tabletten weitgehend unabhängig von der Korngröße des Ausgangsgranulats ziemlich exakt die gleiche Masse des Beschichtungsmittels enthält.

Nach einem anderen Herstellungsverfahren kann das Granulat auch in einem Extruder gepreßt und durch Düsen ausgedrückt werden, wobei in kurzen Abständen von einigen Millimetern entsprechende Pellets abgebrochen werden. Auch diese lassen sich, wie bereits erwähnt, mit Hilfe eines Meßbechers relativ exakt dosieren. Darüber hinaus können selbstverständlich auch andere Formteile, wie kleine Quader, Würfel oder auch kompliziertere Formen gepreßt werden, falls dies erwünscht ist. Die Formteile sind leicht zu verpacken und gut lagerfähig.

Vorzugsweise enthält das Beschichtungsmittel wenigstens einen wasserunlöslichen mineralischen Zuschlagstoff, oftmals jedoch nicht im Falle von Grundierungsmitteln. Die weiteren Additive können wasserlöslich oder nicht mit Wasser mischbar sein.

Die erfindungsgemäßen in Wasser dispergierbaren festen, rieselfähigen Beschichtungsmittel lassen sich baustellenseitig leicht mit Wasser zu der erwünschten Konsistenz auflösen, wobei die wasserlöslichen Bestandteile vollständig und rasch in Lösung gehen. Sie sind nichtstaubend und lassen sich daher an der Baustelle leicht verarbeiten, und sie entmischen sich nicht, da die Formteile beim Transport im wesentlichen ihre aus der Fertigung stammende Zusammensetzung behalten und die Formteile untereinander im wesentlichen gleiche Zusammensetzung haben.

Der Wassergehalt des erfindungsgemäßen Beschichtungsmittelgranulats ist wesentlich für die leichte baustellenseitige Anmachbarkeit des Gemisches mit Wasser. Bevorzugt liegt der Wassergehalt der erfindungsgemäßen Beschichtungsmittel im Bereich von 0,1 bis 10, besonders im Bereich von 0,1 bis 5 Gew.-%.

Die Einzelkomponenten der erfindungsgemäßen Beschichtungsmittel sind so auszuwählen, daß der pH-Wert beim Anmachen in einer beliebigen Wassermenge nicht stark sauer ist und daher unabhängig von der verwendeten Wassermenge stets oberhalb 6, vorzugsweise im pH-Bereich von 7 bis 12 liegt.

Die Zusammensetzung des Gemisches hängt wesentlich von der Verwendung des fertigen Beschichtungsmittels ab, d. h. ob es sich um Grundierungen, Farben, Lacke, Putze, Fußbodenbeschichtungen oder andere Beschichtungsmittel handelt. Bei den Farben kommt es wieder darauf an, ob es sich um Dispersionsfarben, Emulsionsfarben, Silikatfarben oder dergleichen handelt.

Von dem Begriff der wasserunlöslichen mineralischen Zuschlagstoffe sollen mineralische Füllstoffe und Pigmente, wie Calciumcarbonat, Aluminiumsilikat, Schwerspat, Talkum oder Glimmer, Titandioxid, Eisenoxid, Kaolin, Quarz, Siliciumdioxid, Bariumsulfat, Aluminiumhydroxid, Perlit, Christobalit, Wollastonit, Faserfüllstoffe oder Glaspulver umfaßt werden, wobei bevorzugte Korngrößen der Zuschlagstoffe im Bereich von 0,001 bis 6 mm liegen. Selbstverständlich können die Gemische auch zusätzlich bestimmte organische Füllstoffe, Pigmente oder andere Farbmittel enthalten, wenn dies erwünscht ist. Der Gehalt des Beschichtungsmittels, bezogen auf Trockengewicht, an Zuschlagstoff liegt vorzugsweise im Bereich von 0 bis 99,9, besonders von 20 bis 90 Gew.-%. Im Falle von Farben besteht ein wesentlicher Anteil des Zuschlagstoffes aus dem Pigment Titandioxid und/oder anderen Farbpigmenten, wobei der Rest des Zuschlagstoffes aus mineralischen Füllstoffen, wie Calciumcarbonat, Talkum, Glimmer, Marmormehl usw., besteht.

Das Bindemittel ist im Regelfall ein organisches oder partiell-organisches Polymer, kann aber auch anorganischer Natur sein. Beispielsweise im Falle von Silikatfarben kann es aus Kaliumsilikat bestehen. Als organische Bindemittel sind beispielsweise Homopolymere oder Copolymere von Vinylacetat, Vinylversatat, Vinyllaurat, Acryl- oder Methacrylsäureestern, Vinylchlorid, Acrylnitril, Butadien und Styrol sowie Polysiloxane und Kombinationen hiervon zu nennen. Im Regelfall handelt es sich bei den Bindemitteln um thermoplastische Kunstharze. Das Bindemittel ist, bezogen auf das Trockengewicht des Beschichtungsmittels, in einer Menge von 0 bis 99,9, vorzugsweise von 3 bis 70, besonders von 5 bis 20 Gew.-% enthalten.

Ein Netzmittel bzw. Emulgator dient dazu, das fertige Beschichtungsmittel zu stabilisieren.

Geeignete Netzmittel sind bekannt und sind in dem Beschichtungsmittel, bezogen auf das Trockengewicht desselben, vorzugsweise in einer Menge von 0,01 bis 10, besonders 0,1 bis 2 Gew.-% enthalten.

Zusätzlich können die erfindungsgemäßen Beschichtungsmittelgranulate weitere übliche Bestandteile von Beschichtungsmitteln enthalten, wie beispielsweise Verdickungsmittel, besonders solche auf Polysaccharidbasis, wie Xanthan-Gum oder Guar-Derivate, insbesondere in einer Menge von 0,1 bis 3 Gew.-%, bezogen auf das Trockengewicht des Granulats. Andere Bestandteile sind beispielsweise Entschäumer, wie amorphe Kieselsäure, die insbesondere in einer Menge von 0,01 bis 3, vorzugsweise 0,1 bis 2 Gew.-% enthalten sind.

Weiterhin enthalten die erfindungsgemäßen Beschichtungsmittel zweckmäßig ein Schutzkolloid, z. B. Polyvinylalkohol, vorzugsweise in einer Menge von 0,01 bis 5 Gew.-%, und/oder ein Hydrophobierungsmittel, wie eine siliciumorganische Verbindung, vorzugsweise in einer Menge von 0,01 bis 10, besonders 0,01 bis 3 Gew.-% und/oder wenigstens ein Biozid, wie ein Topf-Konservierungsmittel, vorzugsweise in einer Menge von 0,01 bis 5 Gew.-%.

Es ist zweckmäßig, daß die wasserlöslichen Bestandteile des erfindungsgemäßen Beschichtungsmittels eine Teilchengröße im Bereich von 0,001 bis 6 mm besitzen, um die Anmachgeschwindigkeit an der Baustelle zu verkürzen.

Das erfindungsgemäße Verfahren zur Herstellung der oben beschriebenen in Wasser dispergierbaren Beschichtungsmittelformteile besteht darin, daß man ein pulverförmiges Gemisch eines Teils oder aller der Bestandteile des Beschichtungsmittels als Trägermaterial mit einer die übrigen oder alle oder einen Teil aller Komponenten des Beschichtungsmittels enthaltenden wäßrigen Dispersion oder mit Wasser mittels eines Gasstromes bei einer Temperatur von 30 bis 800 °C in Berührung bringt und dabei so viel Wasser entzieht, daß die Restfeuchte des gesamten Behandlungsgemisches im Bereich von 0,01 bis 15 Gew.-% liegt und das Behandlungsgemisch zunächst in fester, rieselförmiger Form vorliegt, wobei dieses Gemisch dann zu Tabletten oder sonstigen Formteilen gepreßt wurde.

Bei der Durchführung des Verfahrens geht man zweckmäßig so vor, daß man einen Teil der Bestandteile des Beschichtungsmittels in Form eines pulverförmigen Gemisches mit einer wäßrigen Dispersion der restlichen Komponenten des Beschichtungsgemisches mittels des Gasstromes in Berührung bringt. Bei dieser Ausführungsform besitzt das entstehende Agglomerat Komponenten unterschiedlicher Zusammensetzung.

Statt dessen kann man aber auch so vorgehen, daß alle Komponenten des Agglomerates im wesentlichen gleiche Zusammensetzung haben und aus der Gesamtheit der Bestandteile des Beschichtungsmittels bestehen. Zur Herstellung eines solchen Granulates kann man derart vorgehen, daß man die Gesamtheit der Rezeptur in Pulverform mit einem Gasstrom in Berührung bringt, der eine wäßrige Dispersion der gesamten Rezeptur oder lediglich Wasser enthält. Im letzteren Falle löst das Wasser während der Behandlung einen Teil der löslichen Bestandteile der Rezeptur, was zur Granulatbildung führt.

Eine bevorzugte Ausführungsform des Verfahrens besteht darin, daß man das pulverförmige Gemisch von Rezepturbestandteilen in der Trockenapparatur vorlegt und durch Einblasen eines Gasstromes von unten in eine Wirbelschicht überführt, in die mit dem Gasstrom oder seitlich bzw. von oben mit einem weiteren Gasstrom die übrigen Komponenten des Beschichtungsmittels bzw. alle Komponenten des Beschichtungsmittels in wäßriger Dispersion bzw. Wasser alleine eingespritzt werden. Als Gasstrom wird zweckmäßig ein Luftstrom verwendet. Das Trocknungsverfahren kann bei Atmosphärendruck oder Unterdruck durchgeführt werden. Bezüglich der Komponentenauswahl im Hinblick auf die Endverwendung und den pH-Wert gelten die obigen Ausführungen.

Die Restfeuchte des Granulates wird günstigerweise auf 0,1 bis 10, vorzugsweise 0,1 bis 5 Gew.-% eingestellt. Die Temperatur des Trocknungsverfahrens liegt zweckmäßig im Bereich von 30 bis 100° C, vorzugsweise 40 bis 80° C. Das Verfahren kann ansatzweise oder kontinuierlich durchgeführt werden.

### Beispiel

16 Gewichtsteile eines Dispersionspulvers auf der Basis eines Mischpolymers von Ethylen, Vinylchlorid und Vinyllaurat werden mit 0,5 Gewichtsteilen eines pulverförmigen Polysaccharid-Verdickungsmittel in Pulverform vermischt. Dieses Trockengemisch wird im Verfahren vorgelegt.

Getrennt hiervon wird eine wäßrige Dispersion aus 35 Gewichtsteilen Wasser, 2 Gewichtsteilen Polyvinylalkohol, 0,5 Gewichtsteilen einer Polyvinylpyrrolidon-Netzmittellösung, 0,5 Gewichtsteilen Lithiumcarbonat, 0,5 Gewichtsteilen Entschäumer auf der Basis eines Polyetherderivates eines Fettalkohols und einer Fettsäure, 2 Gewichtsteilen einer amorphen pyrogenen Kieselsäure, 12 Gewichtsteilen Talkum/Dolomit-Verwachsung, 9 Gewichtsteilen Magnesium-Aluminiumsilikathydrat, 3 Gewichtsteilen Calciumcarbonat und 19 Gewichtsteilen Titandioxid hergestellt.

Unter Verwendung von Druckluft wird das Trockengemisch in Form einer Wirbelschicht fluidisiert. Mit Hilfe eines seitlich mit 5,8 bar eingeführten Druckluftstromes wird die wäßrige Dispersion in die Wirbelschicht eingesprüht. Die Zulufttemperatur beträgt etwa 55° C, die Ablufttemperatur etwa 28° C. Man bekommt dabei ein Granulat mit einer Korngröße eines mittleren Durchmessers von etwa 0,5 mm mit einer Temperatur von etwa 28° C und einem Restfeuchtegehalt von etwa 3 %. Das Verfahren läßt sich durch Änderung der Verfahrensparameter, z. B. durch Erhöhung des Druckes des eingeführten Druckluftstromes so einstellen, daß die Korngröße des Granulats auf den bevorzugten Bereich von 100 bis 200 µm (0,1 bis 0,2 mm) verringer wird. Dieses Granulat wird dann in entsprechenden Formen mit einer Kraft von etwa 10 kN zu Tabletten mit einem Durchmesser von 16 mm und einer Höhe von 5 mm gepreßt. Die Tabletten können exakt dosiert im Verhältnis 1 : 1 mit Wasser gemischt werden und ergeben dann eine hochwertige Innenfarbe mit normgerechten Eigenschaften. Wegen der kleinen Korngröße des Ausgangsgranulats erhalten die Tabletten zum einen eine ausreichende Festigkeit für den Transport und die Lagerung, zum anderen lösen sie sich jedoch bei Kontakt mit Wasser hinreichend schnell und Klumpenbildung auf.

## Patentansprüche

1. In Wasser dispergierbares Beschichtungsmittel, bestehend aus einem Bindemittel und weitere Additive enthaltenden Gemisch, **dadurch gekennzeichnet**, daß es in Form gepreßter Formteile mit einem Gehalt an freiem oder gebundenem Wasser von 0,01 bis 15 Gew.-% vorliegt und beim Dispergieren in einer beliebigen Menge Wasser einen pH-Wert oberhalb 6 ergibt.

2. Beschichtungsmittel nach Anspruch 1, **dadurch gekennzeichnet**, daß es vorzugsweise Zuschlagstoff, vorzugsweise Füllstoffe und/oder Pigmente, in einer Menge von 0 bis 99,9, vorzugsweise 20 bis 90 Gew.-%, bezogen auf die Trockensubstanz des Beschichtungsmittels enthält.

3. Beschichtungsmittel nach einem der Ansprüche 1 oder 2, **dadurch gekennzeichnet**, daß es das Bindemittel in einer Menge von 0 bis 99,9, vorzugsweise 3 bis 70 Gew.-%, bezogen auf die Trockensubstanz des Beschichtungsmittels, enthält.

4. Beschichtungsmittel nach einem der Ansprüche 1 bis 3, **dadurch gekennzeichnet**, daß es ein Netzmittel in einer Menge von 0,01 bis 10 Gew.-%, bezogen auf das Trockengewicht des Beschichtungsmittels, enthält.

5. Beschichtungsmittel nach einem der Ansprüche 1 bis 4, **dadurch gekennzeichnet**, daß es als Bindemittel ein organisches oder partiell-organisches Polymer oder ein anorganisches Bindemittel oder Kombinationen hiervon enthält.

6. Beschichtungsmittel nach einem der Ansprüche 1 bis 5, **dadurch gekennzeichnet**, daß sein Wassergehalt 0,1 bis 10, vorzugsweise 0,1 bis 5 Gew.- % beträgt.

7. Beschichtungsmittel nach einem der Ansprüche 1 bis 6, **dadurch gekennzeichnet,** daß es zusätzlich ein oder mehrere Verdickungsmittel, vorzugsweise ein Polysaccharid, enthält.

8. Beschichtungsmittel nach Anspruch 7, **dadurch gekennzeichnet**, daß es das Verdickungsmittel in einer Menge von 0,01 bis 3 Gew.-% enthält.

9. Beschichtungsmittel nach einem der Ansprüche 1 bis 8, **dadurch gekennzeichnet**, daß es zusätzlich ein Entschäumungsmittel, vorzugsweise in einer Menge von 0,01 bis 3, besonders 0,1 bis 2 Gew.-%, enthält.

10. Beschichtungsmittel nach einem der Ansprüche 1 bis 9, **dadurch gekennzeichnet**, daß es als weiteres Additiv wenigstens ein Schutzkolloid, vorzugsweiwse in einer Menge von 0,01 bis 5 Gew.-%, enthält.

11. Beschichtungsmittel nach einem der Ansprüche 1 bis 10, **dadurch gekennzeichnet**, daß es zusätziich ein Hydrophobierungsmittel, vorzugsweise in einer Menge von 0,01 bis 10, besonders von 0,01 bis 3 Gew.-%, enthält.

12. Beschichtungsmittel nach Anspruch 11, **dadurch gekennzeichnet**, daß es als Hydrophobierungsmittel eine siliciumorganische Verbindung enthält.

13. Beschichtungsmittel nach einem der Ansprüche 1 bis 12, **dadurch gekennzeichnet**, daß es zusätzlich wenigstens ein Biozid, vorzugsweise insgesamt in einer Menge von 0,01 bis 5 Gew.-% enthält.

14. Beschichtungsmittel nach einem der Ansprüche 1 bis 13, **dadurch gekennzeichnet**, daß die Formteile aus einem Granulat mit einer Korngröße zwischen 50 und 5000 µm, vorzugsweise zwischen 100 und 200 µm, hergestellt sind.

15. Beschichtungsmittel nach einem der Ansprüche 1 bis 14, **dadurch gekennzeichnet**, daß es in Form von Tabletten vorliegt, die einen Durchmesser zwischen 10 und 30 mm und eine Höhe zwischen 3 und 10 mm und vorzugsweise eine Druckfestigkeit zwischen 2 und 100 N, besonders bevorzugt von etwa 5 N haben.

16. Beschichtungsmittel nach einem der Ansprüche 1 bis 15, **dadurch gekennzeichnet**, daß es Farbpigmente für die Verwendung des Beschichtungsmittels als Abtönfarbe enthält.

17. Verfahren zur Herstellung eines Beschichtungsmittels nach einem der Ansprüche 1 bis 16, **dadurch gekennzeichnet**, daß man bin pulverförmiges Gemisch von Bestandteilen des Beschichtungsmittels als Trägermaterial mit einer die übrigen oder alle oder einen Teil aller Komponenten des Beschichtungsmittels enthaltenden wäßrigen Dispersion oder mit Wasser mittels eines Gasstromes bei einer Temperatur von 30 bis 800 °C in Berührung bringt und dabei so viel Wasser entzieht, daß die Restfeuchte des gesamten Behandlungsgemisches im Bereich von 0,01 bis 15 Gew.-% liegt und das Behandlungsgemisch zunächst in rieselförmiger Granulatform vorliegt und anschließend zu Formteilen wie zum Beispiel Pellets oder Tabletten verpreßt wird.

18. Verfahren nach Anspruch 17, **dadurch gekennzeichnet**, daß man dem Behandlungsgemisch Wasser bis zu einer Restfeuchte von 0,1 bis 10, vorzugsweise 0,1 bis 5 Gew.-% entzieht.

19. Verfahren nach Anspruch 17 oder 18, **dadurch gekennzeichnet**, daß man das pulverförmige Trägermaterial in einer Wirbelschicht mit der wäßrigen Dispersion oder dem Wasser in Berührung bringt.

20. Verfahren nach einem der Ansprüche 17 bis 19, **dadurch gekennzeichnet**, daß man bei einer Temperatur von 30 bis 100° C, vorzugsweise 40 bis 80 °C arbeitet.

21. Verfahren nach einem der Ansprüche 17 bis 20, **dadurch gekennzeichnet**, daß Tabletten mit einem Durchmesser zwischen 10 und 30 mm und einer Höhe zwischen 3 und 10 mm mit Hilfe einer Presse bei einer Preßkraft zwischen 3 und 70 kN, vorzugsweise etwa 10 kN, und vorzugsweise mit einer Größe von etwa 16 mm Durchmesser und 5 mm Dicke hergestellt werden.

22. Verfahren nach einem der Ansprüche 17 bis 21, **dadurch gekennzeichnet**, daß ein Ausgangsgranulat mit einer mittleren Korngröße zwischen 50 und 5000 µm, vorzugsweise zwischen 100 und 200 µm verwendet wird.
